# EUROPEAN PATENT SPECIFICATION

(11) **EP 3 478 488 B1**
(45) Date of publication and mention of the grant of the patent: **21.06.2023**
(21) Application number: 16907524.9
(22) Date of filing: 29.06.2016
(51) Int. Cl.: B32B 3/02, B65D 65/40, B32B 3/26, B32B 3/28, B32B 7/02, B32B 7/12, B32B 7/14

(54) **MANUALLY OPENABLE RECYCLABLE PACKAGE**
MANUELL ZU ÖFFNENDE, RECYCELBARE VERPACKUNG
EMBALLAGE RECYCLABLE POUVANT ÊTRE OUVERT MANUELLEMENT

(43) Date of publication of application: 08.05.2019
(73) Proprietor: Amcor Flexibles North America, Inc., Neenah, WI 54956 (US)
(72) Inventor: LAHTI, Hanna-mari, 33880 Lempäälä (FI); PUTKISTO, Kaisa, P., 33720 Tampere (FI)
(74) Representative: Vossius & Partner Patentanwälte Rechtsanwälte mbB
(86) International application number: PCT/US2016/039991
(87) International publication number: WO 2018/004558

(56) References cited:
- US-A- 5 882 749
- US-A- 5 882 749
- US-A1- 2005 100 729
- US-A1- 2005 100 729

## Description

### BACKGROUND OF THE INVENTION

The present invention relates generally to primary packaging and more particularly, to manually openable packages for containing a product. Specifically, the present invention refers to manually openable packages formed from materials which are generally considered recyclable.

Discarded packaging materials often wind up in a landfill. In some countries, particularly the U.S., there is a significant decrease in the availability of landfill space when approximately 90% of the municipal solid waste is disposed of by landfilling. Recyclable packaging materials can dramatically reduce landfill waste. Today, there are a number of plastics considered recyclable which may enter established recycling streams. These materials include low density and linear low density polyethylene, high density polyethylene, polypropylene, polyethylene terephthalate, polystyrene and a few others. Polyethylene terephthalate (PET) bottles and jars are generally considered recyclable. The PET can be recovered and recycled again and again through washing and re-melting for use in new food and non-food packaging applications, or by chemically breaking down the PET into its constituent raw materials, which are then purified and converted into new recycled PET resins. In the last few years there has been a significant increase in the use of PET trays by the packaging industry. Unfortunately, most of these trays and other PET containing packaging cannot be easily recycled because they are made up of a plurality of layers of a variety of plastic materials. Recycling of such packages can involve costly cleaning and sorting operations to separate the recyclable plastics from any non-recyclable materials. The fewer the non-recyclable materials there are and the more chemically similar the recyclable plastics present in a package, the less expensive and more efficient the recycling operations become.
US 2005/0100729 A1 discloses a coextruded, biaxially oriented polyester film which can be used as lid film for APET/CPET or CPET trays; the film has a base layer (B) and an outer layer (A) wherein (A) comprises particles and a polyester composed of 12 to 89 mol% of units derived from an aromatic dicarboxylic acid and 11 to 88 mol% of units derived from an aliphatic dicarboxylic acid, and wherein (B) comprises poly(m-xyleneadipamide).

### SUMMARY OF THE INVENTION

An important object of the present invention is to provide a package that includes a tray and a lidding film, both of which are suitable for recycling into a polyethylene terephthalate (PET) recycling stream. The package is preferably thermoplastic. In one preferred embodiment, the package of the present invention advantageously comprises at least 97% by weight of polyethylene terephthalate materials relative to the total weight of the package.

Another object is to provide a package especially for retail display for containing a food such as, but not limited to, fresh produce, cheeses and meats, and/or non-food product. In one preferred embodiment, the package of the present invention is advantageously well-suited for packaging of fresh unprocessed and processed food, and especially for respiring foodstuffs, particularly carbon dioxide respiring foodstuffs. One particular application is packaging of cheese such as for example, but not limited to, Emmental, Gouda and Edam, Towards this specific end, in some preferred embodiments, the packages may have an average oxygen transmission rate of 12 cm³/m² for 24 hours at 23° C and 50% relative humidity and an average carbon dioxide transmission rate of 54 cm³/m² for 24 hours at 23° C and 50% relative humidity. In other preferred embodiments where protection against the ingress of oxygen is required, the packages may have an average oxygen transmission rate of less than 12 cm³/m² for 24 hours at 23° C and 50% relative humidity. In some preferred embodiments, the package may be a vertical or horizontal form-fill-seal package.

Still another object is to provide a manually openable package which includes a tray sealed to a lidding substrate by a peelable heat seal. A manually openable package is one in which the lidding substrate can readily peel apart by hand from the tray without uncontrolled or random tearing or rupturing of the tray and/or lidding substrate. Peel strength can be controlled over a wide temperature range. Seal strength of the seal between the tray and lidding substrate is sufficient to ensure that the seal remains secure and unbroken during package fabrication, distribution and storage. In one preferred embodiment, the peelable heat seal between the tray and lidding substrate is hermetic and can readily peel apart by hand without uncontrolled or random tearing or rupturing of the tray and/or lidding substrate. For example, a manually peelable heat seal such as one formed with a heat seal lacquered oriented polyethylene terephthalate (OPET) lidding substrate sealed to an amorphous polyethylene terephthalate (APET) tray at a temperature of 140-170° C under a pressure of 0.5 N/mm² exhibits an initial seal opening force in the range from 1 to 2.5 N/15 mm and propagation peel force ranging from 1 to 2.5 N/15 mm when tested by a "T-peel method" at 23° C at a speed of 200 mm/min. Initial seal opening force and propagation peel force may vary depending upon the thickness of the heat seal lacquer and the sealing temperature used to seal the tray and lidding substrate together.

Provided herein is a package for containing a product having a tray with a product receiving area and a sealing flange. The package includes a thermoformed lidding substrate having sealing margin wherein the lidding substrate is as defined in claim 1. The package further includes a peelable hermetic seal between the sealing margin of the lidding substrate to the sealing flange of the tray. The tray and the lidding substrate may each be thermoplastic, or they both may be thermoplastic. The package has two basic components: a lidding substrate comprises an oriented polyethylene terephthalate layer having a thickness of between 100 µm and 250 µm and a polyester copolymer heat sealing lacquer coating applied to the oriented polyethylene terephthalate layer and the tray comprises a mono-layer of amorphous polyethylene terephthalate, oriented polyethylene terephthalate, crystalline polyethylene terephthalate or recycled polyethylene terephthalate. Not only are the polyethylene terephthalate materials used in the package suitable for a PET recycling stream, but the polyester copolymer heat sealing lacquer coating is also compatible with PET recycling streams.

According to the invention, the package includes a lidding substrate comprising an oriented polyethylene terephthalate layer and a polyester copolymer heat sealing lacquer coating applied to the oriented crystalline polyethylene terephthalate layer. According to the invention, the tray comprises a mono-layer of amorphous polyethylene terephthalate, oriented polyethylene terephthalate, crystalline polyethylene terephthalate or recycled polyethylene terephthalate.

In some preferred embodiments, both the lidding substrate and tray are rigid or semi-rigid.

In some preferred embodiments, the tray is rigid or semi-rigid while the lidding substrate is flexible.

In some preferred embodiments, both the lidding substrate and tray are flexible.

In some preferred embodiments, the polyester copolymer heat sealing lacquer coating is pattern-applied onto the oriented polyethylene terephthalate layer.

In such embodiments, the polyester copolymer heat sealing lacquer coating is non-extensive with the oriented polyethylene terephthalate layer.

In some preferred embodiments, the polyester copolymer heat sealing lacquer coating is co-extensive with the oriented polyethylene terephthalate layer.

An advantageous optional feature of the present invention is that it may include an integrally formed tamper-evident feature. In one preferred embodiment, the tamper-evident feature comprises visible whitened area of the sealing flange of the tray produced when the hermetic seal has been breached which occurs when the lidding film is peeled from the tray.

### BRIEF DESCRIPTION OF THE DRAWINGS

Further features and advantages of the present invention will become apparent from the following detailed description, taken in combination with the appended drawings, in which:
FIG. 1 illustrates a schematic view of a package according to an embodiment.
FIG. 2 illustrates an exploded schematic view of a package according to an embodiment.
FIG. 3 illustrates a top-down view of a lacquer coating applied in-register onto oriented polyethylene terephthalate layer of the lidding substrate according to an embodiment.
FIG. 4 illustrates a cross-sectional view of a two-layer laminate suitable for use as either a lidding substrate or tray according to an embodiment.

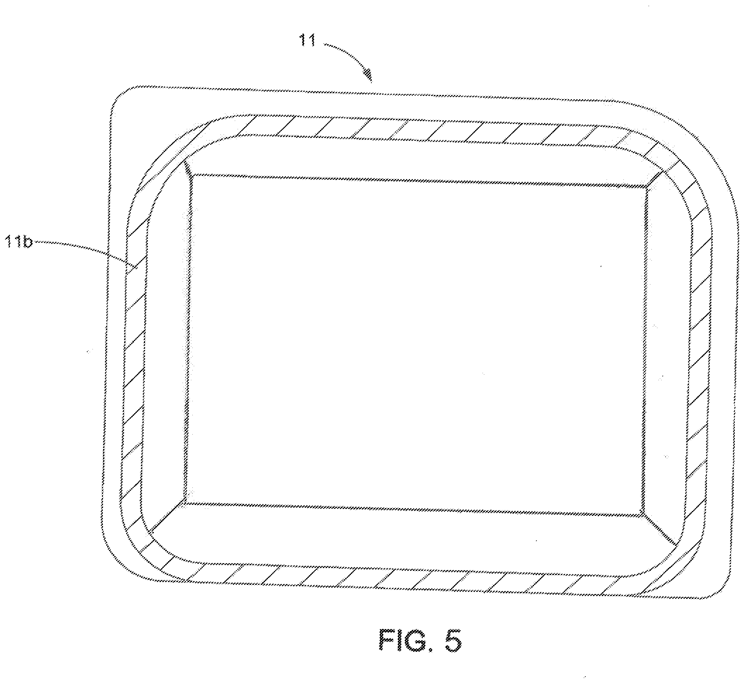

FIG. 5 illustrates a top-down view of a lacquer coating applied in-register onto oriented polyethylene terephthalate layer of the tray according to an embodiment.

### DETAILED DESCRIPTION OF THE INVENTION

Reference herein to "polyethylene terephthalate materials" means something formed from a polymer of polyethylene terephthalate. Examples include one or more of: amorphous polyethylene terephthalate, oriented polyethylene terephthalate, crystalline polyethylene terephthalate or recycled polyethylene terephthalate. Polyethylene terephthalate materials are recycleable.

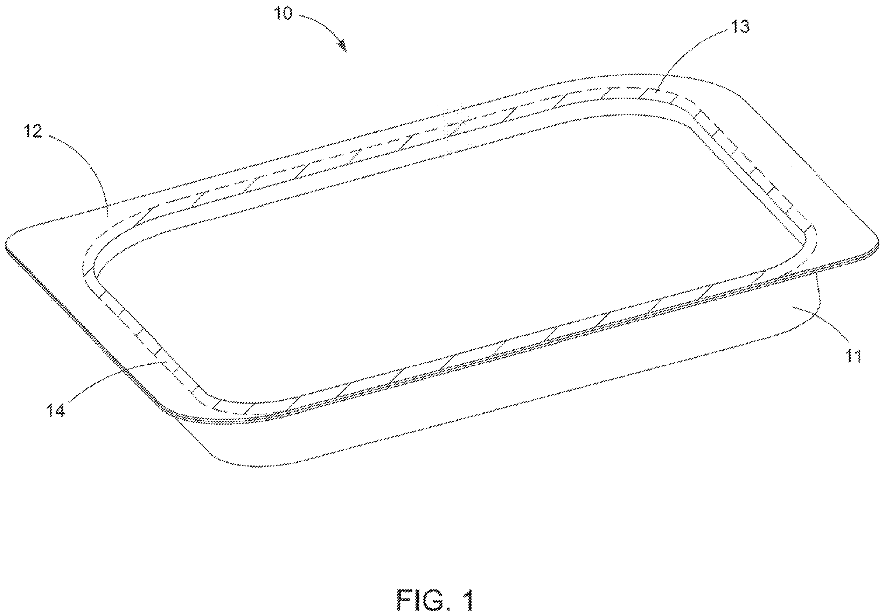

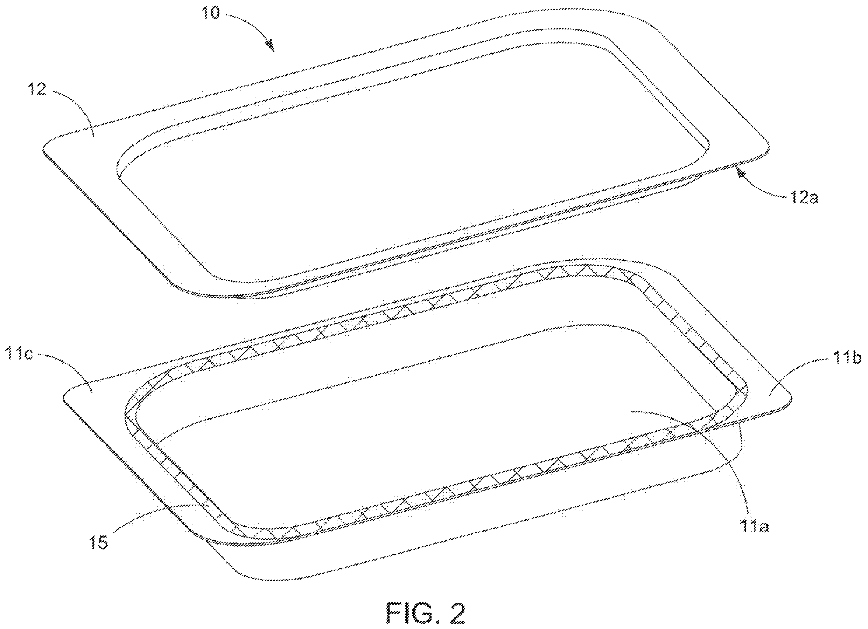

A preferred embodiment of the package **10** includes a thermoplastic tray **11** and a multilayer thermoplastic lidding film laminate **12** as depicted in FIGS. 1 and 2. The thermoplastic tray **11** may be formed as a flexible, rigid and/or semi-rigid substrate and may also have any shape as required by the product being packaged. In one preferred embodiment, tray **11** is rigid or semi-rigid substrate. In one preferred embodiment, tray **11** is rigid or semi-rigid substrate and thermoformed, and has a product receiving area **11a** and a sealing flange **11b**. The depth of thermoforming, *i*.*e*., product receiving area may vary depending upon the amount and dimensions of the product(s) being packaged. It should be understood that the package may also include a non-thermoformed tray (not shown) having a product receiving area and a sealing flange. In one preferred embodiment, tray **11** consists essentially of a mono-layer amorphous polyethylene terephthalate (APET). As depicted in FIGS. 1 and 2, the product receiving area **11a** is a thermoformed cavity displaced horizontally away from the sealing flange **11b**. This displacement may be any distance including distances of between 1 mm and 100 mm, or between 20 mm and 75 mm, or between 10 mm and 20 mm. In this particular embodiment, the sealing flange 11b circumvents the product receiving area **11a** and is shown having a width about 10 mm. The width of the sealing flange **11b** may vary any distance and may include distances of between 2 mm and 20 mm, or 4 mm and 8 mm. It should be understood that flange **11b** may further optionally include an extended flap area **11c** located at one corner of package **10** which facilitates the peeling open of said package. In at least one preferred embodiment, tray **11** includes good optical properties such as low haze, high gloss and/or no streaks or lines which detract from the tray's appearance. In another preferred embodiment, a substantial area of the tray **11** is optical transparent in order to render the product packaged therein visibly observable by the consumer when the package is displayed in a retail store. Tray **11** may have a thickness which varies between 50 µm and 700 µm, or 100 µm and 500 µm, or 125 µm and 250 µm.

As depicted in FIGS. 1-3, one preferred embodiment of the thermoplastic lidding substrate **12** is illustrated having a substantially flat construction which is sealed to tray **11** at the tray's flange **11b** to cover the product receiving area **11a**. Lidding substrate **12** may include a flexible thermoplastic substrate, or as depicted in this particular example, a rigid or semi-rigid thermoplastic substrate. The overall thickness of lidding substrate **12** may vary depending upon the thickness of the individual layers used to construct the laminate, Typically, the overall thickness of lidding substrate **12** is between 25 µm and 500 µm, or between 50 µm and 300 µm, or between 100 µm and 250 µm, however, according to the present invention the oriented polyethylene terephthalate layer has a thickness of between 100 µm and 250 µm. Lidding substrate **12** has a sealing margin **12a** which is peelable sealed to the tray **11**. This sealing margin **12a** encompasses a portion of the peripheral edge of the laminate and may vary in width. In some preferred embodiments, lidding substrate **12** may be slightly thermoformed such that the sealing margin **12a** is horizontally offset from the remaining portion of the laminate. In such preferred embodiments, lidding substrate may have a draw depth of between 1 mm and 10 mm, or between 3 mm and 8 mm, or between 5 mm and 7 mm,

In its final form, package **10** further includes a hermetic seal **13** comprising a perimeter heat seal **14** circumventing the product receiving area **11a** formed by heat sealing the sealing margin **12a** of the lidding substrate **12** to the sealing flange **11b** of the tray. Package **10** may optionally include an integrally formed tamper-evident feature **15.** In one preferred embodiment, the tamper-evident feature **15** is visible whitened area of the sealing flange **11b** of the tray which is produced when the hermetic seal **13** has been breached and occurs when the lidding substrate **12** is peeled from the tray **11,** as depicted in FIG. 2.

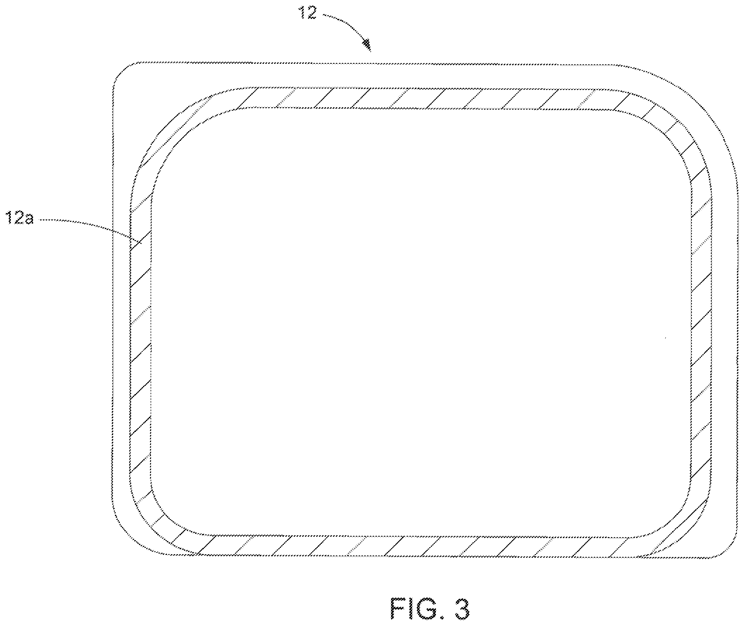

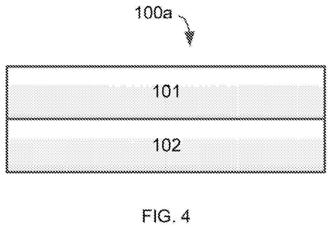

The construction of the tray **11** and lidding substrate **12** are important aspects of the present invention which includes one or more recyclable layers. Turning to FIG. 4, item 100a is directed to an oriented polyethylene terephthalate layer 101 having a polyester copolymer heat sealing lacquer coating **102** applied directly onto the surface of layer **101.** In a first version, lidding substrate **12** is 100a, which includes a layer **101** comprising oriented polyethylene terephthalate and a polyester copolymer heat sealing lacquer coating **102** applied directly onto the surface of layer **101** as depicted in FIG. 4. Examples of suitable oriented polyethylene terephthalate include, but are not limited to those sold under the tradename ARYAPET-A100, ARYAPET-A200, and ARYAPET-A300 by JBF RAK LLC, Ras AI Khaimah, United Arab Emirates. Advantageously, such materials are optically transparent. According to the present invention the thickness of the oriented polyethylene terephthalate is between 100 µm and 250 µm, and may vary between 125 µm and 250 µm. The heat sealing lacquer coating **102** is a polyester copolymer coating. Heat sealing lacquer coating **102** may be applied to using well-known reverse gravure, direct gravure and/or flexo-printing technologies. Optionally, the surface of oriented polyethylene terephthalate may be pre-treated by corona discharge before the heat sealing lacquer is applied thereto. After application to a substrate, lacquer coating **102** provides a heat-sealable surface which can form a peelable heat seal to tray **11** under heat and/or pressure. Examples of such commercially available heat-sealable coatings include, but are not limited to those sold under the trademark family ADCOTE^{™} by The Dow Chemical Company, Midland, MI, USA. In some preferred embodiments as shown in FIG. 3, heat sealing lacquer coating **102** is applied in-register onto oriented polyethylene terephthalate layer **101** such that only a portion of the surface area of layer **101** encompassing the sealing area **12a** is thereby covered. In this particular embodiment, heat sealing lacquer coating layer **102** is coated onto layer **101** to form either a transparent or semi-opaque band **101a** having a width equal to about 2.5 mm, or 5 mm, or 10 mm, or 20 mm extending from an outer edge to a pre-determined distance towards the center of lidding substrate **12.** Alternatively (not shown), heat sealing lacquer coating **102** may be coated onto oriented polyethylene terephthalate layer **101** such that it covers the entire surface area of layer **101.** The polyester copolymer heat sealing lacquer coating may have a thickness of between 0.5 µm and 10 µm (3g/m² to 5g/m²). According to the present invention, tray **11** comprises a mono-layer comprising amorphous polyethylene terephthalate (APET), oriented polyethylene terephthalate (OPET) crystalline polyethylene terephthalate (CPET) or recycled polyethylene terephthalate (RPET). Examples of commercially available amorphous polyethylene terephthalate (APET) mon-layers include, but are not limited to those sold by Coexpan Montonate S.R.L., Sumirago, Italy; Klöckner Pentaplast GmbH, Montabaur, Germany; and Sky-light A/S, Varde, Denmark.

It is also within the scope of the present invention to reverse-print indicia onto the tray and/or lidding substrate using conventional solvent-based inks. Suitable ink for use with the present invention need not be water-soluble, but can be removed from the lidding substrate and/or tray using an etching and mechanical abrasion process which is generally recognized as fully approved for food grade recycling. An overprint lacquer coating may also be included to protect the printed indicia and/or each of the lidding substrate and tray. Solvent-based or water-washable inks and overprint lacquers are known in the art and may be used with the present invention.

The above description and examples illustrate certain embodiments of the present invention and are not to be interpreted as limiting.

## Claims

1. A manually openable recyclable package for containing a product comprising:
a tray having a product receiving area and a sealing flange;
a thermoformed lidding substrate having a sealing margin;
wherein:
the lidding substrate comprises an oriented polyethylene terephthalate layer having a thickness of between 100 µm and 250 µm and a polyester copolymer heat sealing lacquer coating applied to the oriented polyethylene terephthalate layer, and the tray comprises a mono-layer of amorphous polyethylene terephthalate, oriented polyethylene terephthalate, crystalline polyethylene terephthalate or recycled polyethylene terephthalate; and
a peelable hermetic seal between the sealing margin of the lidding substrate and the sealing flange of the tray.

2. The package according to claim 1, wherein the peelable hermetic seal comprises a perimeter heat seal circumventing the product receiving area formed by heat sealing.

3. The package according to claim 1, wherein the package comprises a tamper-evident feature.

4. The package according to claim 3, wherein the tamper-evident feature comprises a visible whitened area of the sealing flange of the tray produced when the hermetic seal has been breached.

5. The package according to any one of claims 1-4, wherein the tray is thermoformed.

6. The package according to claim 1, wherein the lidding substrate has a draw depth of between 1 mm and 20 mm.

7. The package according to any one of claims 1-6, wherein the hermetic seal exhibits an initial seal opening force of 1 to 2.5 N/15 mm and a propagation peel force of 1 to 2.5 N/15 mm when tested by a T-peel method at 23° C at a speed of 200 mm/min.

8. The package according to any one of claims 1-7, wherein the polyester copolymer heat sealing lacquer coating has a thickness of between 0.5 µm and 10 µm.

9. The package according to any one of claims 1-8, further comprising a layer of water-washable ink.

10. The package according to claim 9, further comprising a water-washable overlacquer layer positioned on the surface of the ink.

11. The package according to any one of claims 1-10, wherein the polyester copolymer heat sealing lacquer coating is pattern-applied onto the oriented polyethylene terephthalate layer.

12. The package according to any one of claims 1-11, wherein the polyester copolymer heat sealing lacquer coating is non-extensive with the oriented polyethylene terephthalate layer.

13. The package according to any one of claims 1-12, wherein the package comprises at least 97% by weight polyethylene terephthalate materials relative to the total weight of the package.

14. The package according to any one of claims 1-13, wherein the tray comprises between 1% and 20% by weight of recycled polyethylene terephthalate relative to the total weight of the tray.

15. The package according to any one of claims 1-14, wherein the package is a horizontal form-fill-seal package.

16. The package according to any one of claims 1-15, wherein the package has an average oxygen transmission rate of at least 12 cm³/m² for 24 hours at 23° C and 50% relative humidity.

17. The package according to any one of claims 1-16, wherein the package has an average oxygen transmission rate of less than 12 cm³/m² for 24 hours at 23° C and 50% relative humidity.

## Patentansprüche

1. Manuell zu öffnende, recycelbare Verpackung zum Enthalten eines Produkts, umfassend:
eine Schale mit einem Produktaufnahmebereich und einem Dichtungsflansch;
ein thermogeformtes Deckelsubstrat mit einem Dichtungsrand;
wobei:
das Deckelsubstrat eine Schicht aus orientiertem Polyethylenterephthalat mit einer Dicke zwischen 100 µm und 250 µm und eine auf die Schicht aus orientiertem Polyethylenterephthalat aufgebrachte Polyestercopolymer-Heißsiegellackbeschichtung umfasst und die Schale eine Monoschicht aus amorphem Polyethylenterephthalat, orientiertem Polyethylenterephthalat, kristallinem Polyethylenterephthalat oder recyceltem Polyethylenterephthalat umfasst; und
eine abziehbare hermetische Dichtung zwischen dem Dichtungsrand des Deckelsubstrats und dem Dichtungsflansch der Schale.

2. Verpackung nach Anspruch 1, wobei die abziehbare hermetische Dichtung eine Umfangsheißsiegelung umfasst, die den Produktaufnahmebereich ausspart und durch Heißsiegeln ausgebildet ist.

3. Verpackung nach Anspruch 1, wobei die Verpackung ein sicherheitsverpacktes Merkmal umfasst.

4. Verpackung nach Anspruch 3, wobei das sicherheitsverpackte Merkmal einen sichtbaren geweißten Bereich des Dichtungsflanschs der Schale umfasst, der erzeugt wird, wenn die hermetische Dichtung verletzt wird.

5. Verpackung nach einem der Ansprüche 1-4, wobei die Schale thermogeformt ist.

6. Verpackung nach Anspruch 1, wobei das Deckelsubstrat eine Ziehtiefe zwischen 1 mm und 20 mm aufweist.

7. Verpackung nach einem der Ansprüche 1-6, wobei die hermetische Dichtung bei Prüfung mittels T-Peel-Verfahren bei 23 °C mit einer Geschwindigkeit von 200 mm/min eine anfängliche Dichtungsöffnungskraft von 1 bis 2,5 N/15 mm und eine Weiterreißkraft von 1 bis 2,5 N/15 mm aufweist.

8. Verpackung nach einem der Ansprüche 1-7, wobei die Polyestercopolymer-Heißsiegellackbeschichtung eine Dicke zwischen 0,5 µm und 10 µm aufweist.

9. Verpackung nach einem der Ansprüche 1-8, ferner umfassend eine Schicht aus wasserlöslicher Tinte.

10. Verpackung nach Anspruch 9, ferner umfassend eine wasserlösliche Überlackschicht, die auf der Oberfläche der Tinte angeordnet ist.

11. Verpackung nach einem der Ansprüche 1-10, wobei die Polyestercopolymer-Heißsiegellackbeschichtung als Muster auf die Schicht aus orientiertem Polyethylenterephthalat aufgebracht ist.

12. Verpackung nach einem der Ansprüche 1-11, wobei die Polyestercopolymer-Heißsiegellackbeschichtung sich nicht mit der Schicht aus orientiertem Polyethylenterephthalat erstreckt.

13. Verpackung nach einem der Ansprüche 1-12, wobei die Verpackung zu mindestens 97 Gew.-% Polyethylenterephthalat-Materialien, bezogen auf den Gewichtsprozentsatz der Verpackung, umfasst.

14. Verpackung nach einem der Ansprüche 1-13, wobei die Schale zu zwischen 1 Gew.-% und 20 Gew.-% recyceltes Polyethylenterephthalat, bezogen auf den Gewichtsprozentsatz der Schale, umfasst.

15. Verpackung nach einem der Ansprüche 1-14, wobei die Verpackung eine horizontale Form-Füll-Siegel-Verpackung ist.

16. Verpackung nach einem der Ansprüche 1-15, wobei die Verpackung bei 23 °C und 50 % relativer Feuchte für 24 Stunden eine durchschnittliche Sauerstoffübertragungsrate von mindestens 12 cm³/m² aufweist.

17. Verpackung nach einem der Ansprüche 1-16, wobei die Verpackung bei 23 °C und 50 % relativer Feuchte für 24 Stunden eine durchschnittliche Sauerstoffübertragungsrate von weniger als 12 cm³/m² aufweist.

## Revendications

1. Emballage recyclable pouvant être ouvert manuellement pour contenir un produit comprenant :
une barquette ayant une zone de réception de produit et une bride d'étanchéité ;
un substrat à couvercle thermoformé ayant une marge d'étanchéité ;
le substrat à couvercle comprenant une couche de poly(téréphtalate d'éthylène) orienté ayant une épaisseur comprise entre 100 µm et 250 µm et un revêtement de vernis thermoscellable de copolymère de polyester appliqué sur la couche de poly(téréphtalate d'éthylène) orienté, et la barquette comprenant une monocouche de poly(téréphtalate d'éthylène) amorphe, de poly(téréphtalate d'éthylène) orienté, de poly(téréphtalate d'éthylène) cristallin ou de poly(téréphtalate d'éthylène) recyclé ; et
un joint hermétique pelable entre la marge d'étanchéité du substrat à couvercle et la bride d'étanchéité de la barquette.

2. Emballage selon la revendication 1, le joint hermétique pelable comprenant un joint thermique de périmètre comprenant la zone de réception de produit formé par thermoscellage.

3. Emballage selon la revendication 1, l'emballage comprenant une caractéristique inviolable.

4. Emballage selon la revendication 3, la caractéristique inviolable comprenant une zone blanchie visible de la bride d'étanchéité de la barquette produite lorsque le joint hermétique a été enfreint.

5. Emballage selon l'une quelconque des revendications 1 à 4, la barquette étant thermoformée.

6. Emballage selon la revendication 1, le substrat à couvercle ayant une profondeur d'emboutissage compris entre 1 mm et 20 mm.

7. Emballage selon l'une quelconque des revendications 1 à 6, le joint hermétique présentant une force d'ouverture de joint initiale de 1 à 2,5 N/15 mm une force de pelage de propagation de 1 à 2,5 N/15 mm lorsqu'il est testé par un procédé T-peel à 23 °C à une vitesse de 200 mm/min.

8. Emballage selon l'une quelconque des revendications 1 à 7, le revêtement de vernis thermoscellable de copolymère de polyester ayant une épaisseur comprise entre 0,5 µm et 10 µm.

9. Emballage selon l'une quelconque des revendications 1 à 8, comprenant en outre une couche d'une encre lavable à l'eau.

10. Emballage selon la revendication 9, comprenant en outre une couche de vernis de surlaquage lavable à l'eau positionnée sur la surface de l'encre.

11. Emballage selon l'une quelconque des revendications 1 à 10, le revêtement de vernis thermoscellable de copolymère de polyester étant appliquée par motifs sur la couche de poly(téréphtalate d'éthylène) orienté.

12. Emballage selon l'une quelconque des revendications 1 à 11, le revêtement de vernis thermoscellable de copolymère de polyester étant non extensif avec la couche de polytéréphtalate orienté.

13. Emballage selon l'une quelconque des revendications 1 à 12, l'emballage comprenant au moins 97 % en poids de matières de poly(téréphtalate d'éthylène) par rapport au total de l'emballage.

14. Emballage selon l'une quelconque des revendications 1 à 13, la barquette comprenant entre 1 % et 20 % en poids de poly(téréphtalate d'éthylène) recyclé par rapport au total de la barquette.

15. Emballage selon l'une quelconque des revendications 1 à 14, l'emballage étant un emballage de formage-remplissage-scellement horizontal.

16. Emballage selon l'une quelconque des revendications 1 à 15, l'emballage ayant une vitesse moyenne de transmission d'oxygène d'au moins 12 cm³/m² pendant 24 heures à 23 °C et 50 % d'humidité relative.

17. Emballage selon l'une quelconque des revendications 1 à 16, l'emballage ayant une vitesse moyenne de transmission d'oxygène de moins de 12 cm³/m² pendant 24 heures à 23 °C et 50 % d'humidité relative.
